# EUROPÄISCHE PATENTSCHRIFT

(11) **EP 1 379 409 B1**
(45) Veröffentlichungstag und Bekanntmachung des Hinweises auf die Patenterteilung: **04.08.2010**
(21) Anmeldenummer: 02712961.8
(22) Anmeldetag: 28.03.2002
(51) Int. Cl.: B60R 25/00, B60R 25/10

(54) **FREIGABEEINRICHTUNG FÜR EINE BEWEGLICHE ODER FAHRBARE VORRICHTUNG, INSBESONDERE FÜR EINE BAUMASCHINE**
RELEASE SYSTEM FOR A DEVICE WHICH CAN MOVE OR TRAVEL, ESPECIALLY FOR A CONSTRUCTION MACHINE
SYSTEME DE LIBERATION POUR UN DISPOSITIF MOBILE OU ROULANT, NOTAMMENT POUR UN ENGIN DE CHANTIER

(30) Priorität: 02.04.2001 DE 10116445
(43) Veröffentlichungstag der Anmeldung: 14.01.2004
(73) Patentinhaber: Rösler, Klaus-Dieter, 28844 Weyhe-Jeebel (DE)
(72) Erfinder: Rösler, Klaus-Dieter, 28844 Weyhe-Jeebel (DE)
(74) Vertreter: Wasiljeff, Johannes M.B.
(86) Internationale Anmeldenummer: PCT/EP2002/003507
(87) Internationale Veröffentlichungsnummer: WO 2002/079010

(56) Entgegenhaltungen:
- EP-A- 0 745 959
- EP-A- 0 758 738
- WO-A-94/12372
- DE-A- 19 733 374
- DE-A- 19 753 401
- GB-A- 2 217 494
- US-A- 4 805 722
- US-B1- 6 204 772

## Beschreibung

Die Erfindung betrifft eine Freigabeeinrichtung für eine bewegliche oder fahrbare Vorrichtung, insbesondere für eine Baumaschine, die mindestens eine Steuerschaltung zum Steuern und Ausführen verschiedener Funktionen enthält, mit einer Freigabeschaltung.

Aus der DE 197 33 374.5 A1 ist eine Freigabeeinrichtung zum Freischalten und/- oder Aktivieren eines Objekts, insbesondere eine Baumaschine bekannt, bei der ein kodierbarer .Schlüssel in einer Kodiervorrichtung kodiert werden kann. Wird dann der Schlüssel in eine an der Maschine befindlichen Leseeinheit eingeführt, so liest diese den Code und schaltet danach die Maschine entsprechend den nutzungs spezifischen Daten des Codes frei. Im nicht freigeschalteten oder blockierten Zustand ist aber normalerweise eine Zufuhrleitung, beispielsweise eine Hydraulikleitung, eine elektrische Zündleitung oder die Treibstoffzufuhr unterbrochen. Zum Freischalten mittels des elektronischen Schlüssels wird dann diese Leitung wieder geschlossen.

US 4 805 722 zeigt eine Vorrichtung mit vergleichbaren Merkmalen, nämlich ein Diebstahlsicherungssystem für ein fahrbares Objekt, insbesondere ein Kraftfahrzeug. eine kodierte Karte wird in ein Kartenlesegerät eingeführt. Stimmen die Daten auf der Karte mit denen in einer Computereinheit gespeicherten überein, dann wird durch diese Computereinheit eine Steuereinheit freigegeben, die das Objekt freischaltet. Stimmen die Daten nicht überein, gibt es keine Freigabe.

Beide bekannten Vorrichtungen sind derart ausgebildet, dass eine Freigabeschaltung nach Empfang eines Freigabesignals einem Freigabeprozessor einen Berechtigungscode zuführt, und dass der Freigabeprozessor den Berechtigungscode prüft, bei festgestellter Zulässigkeit des Berechtigungscodes die Steuerschaltung aktiviert und bei festgestellter Unzulässigkeit des Berechtigungscodes die Aktivierung der Steuerschaltung verhindert, so dass dann die Vorrichtung nicht in Betrieb genommen werden kann, die Vorrichtung also nicht freigeschaltet ist.

Beide bekannten Vorrichtungen sind dennoch gegen Diebstahl immer noch nicht ausreichend gesichert, da einerseits durch Gewalt die elektrische Zündleitung oder eine Zufuhrleitung für die Treibstoffzufuhr auch durch unberechtigte Nutzer geschlossen werden kann, wodurch die Maschine freigeschaltet und betriebsfähig ist. Außerdem werden auf einer Baustelle die Maschinen in der Regel von vielen Personen genutzt, so dass auch der codierte Schlüssel bzw. die codierte Karte oder ein über ein Tastatursystem eingebbarer Code von vielen Personen genutzt wird. Bei einem eventuellen Diebstahl kann der mögliche Dieb daher nur schwerlich identifiziert werden.

Ferner zeigt US 6,204,772 B1 ein Verfahren und eine Vorrichtung zur Überwachung einer Maschine, insbesondere einer Baumaschine. Von einer Zentrale wird über eine kabellose Verbindung (z.B. GPS-Satelliten) ein Signal an eine mobile Kommunikationseinheit gesendet, die sich auf bzw. an der Maschine befindet. Bei dem Empfang des Signals wird die momentane Position der Maschine bestimmt und mit einem erlaubten Arbeitsgebiet verglichen. Bei Abweichungen wird ein Alarm ausgelöst und an die Zentrale gesendet.

Schließlich zeigt WO99/43514 ein Verfahren zur Sicherung eines Fahrzeugs mittels eines Alarmsystems. Im Betriebszustand des Fahrzeugs ist das Alarmsystem deaktiviert. Im Nicht-Betriebszustand des Fahrzeugs kann der Nutzer einen von zwei möglichen Betriebszüständen auswählen, in denen das Alarmsystem aktiviert ist. In einem dieser beiden Betriebszustände ist das Alarmsystem scharf gestellt, im zweiten dieser beiden Betriebszustände kann das Fahrzeug noch in gewissen Grenzen bewegt werden. Das Fahrzeug kann somit einer fremden Person etwa zum Aufsuchen eines Parkplatzes übergeben werden, ohne dass ein Alarm auslöst.

Aufgabe der Erfindung ist es daher, eine Freigabeeinrichtung der eingangs genannten Art derart weiterzubilden, dass ein zuverlässiger Diebstahlschutz in einfacher Weise realisiert werden kann. Diese Aufgabe wird mit einer Freigabeeinrichtung nach Anspruch 1 gelöst.

Bei der Erfindung ist ein Freigabeprozessor vorgesehen, der von einer Freigabeschaltung einen Berechtigungscode zugeführt erhält und diesen prüft und bei festgestellter Berechtigung die Steuerschaltung aktiviert und dadurch die Vorrichtung freischaltet, d.h. einen Freischaltzustand herbeiführt, so dass dann die Vorrichtung beispielsweise mit einem konventionellen Zündschlüssel in Betrieb genommen werden kann. Wird dagegen die Zulässigkeit des Berechtigungscodes nicht festgestellt, so wird die Steuerschaltung nicht aktiviert und dadurch die Vorrichtung nicht freigeschaltet. Die Vorrichtung, also beispielsweise die Baumaschine oder ein Lkw kann dann mittels des Zündschlüssels nicht in Betrieb genommen werden.

Die Vorrichtung kann nur dann in Benutzung genommen werden, wenn zuvor die Steuerschaltung, also beispielsweise der Maschinencontroller mittels eines Berechtigungscodes aktiviert ist. Durch Gewaltanwendung läßt sich möglicherweise die Steuerschaltung zerstören, eine Inbetriebnahme durch unberechtigte Dritte ist jedoch zuverlässig verhindert.

Das Freigabesignal enthält eine Information, welche das für den jeweiligen berechtigten Benutzer zugelassene geographische Betriebsgebiet kennzeichnet. Die Freigabeschaltung führt diese Information einem Alarmprozessor zu, der von den Positionsortungsmitteln jeweils die aktuelle geographische Position der Vorrichtung zugeführt erhält. Der Alarmprozessor gibt dann im Freischaltzustand ein Alarmsignal ab, welches bevorzugt auch noch die aktuelle geographische Position der Vorrichtung enthält, wenn sich die Vorrichtung außerhalb des zulässigen geographischen Betriebsgebietes befindet.

Bei Beendigung des Freischaltzustandes lässt sich jeweils ein reduziertes geographisches Ruhegebiet definieren, welches um die zuletzt eingenommene, zugelassene aktuelle geographische Position herum definiert wird und nachfolgend in dem Alarmprozessor gespeichert ist. Wenn dann die Vorrichtung während eines nicht freigeschalteten Zustandes dieses beschränkte Ruhegebiet verläßt, gibt der Alarmprozessor bevorzugt ein Alarmsignal ab, so dass der Radius bei unerlaubter Entwendung oder Benutzung geographisch entsprechend reduziert ist.

Gemäß einer besonders bevorzugten Ausführungsform der Erfindung ist der Freigabeprozessor integral in der Steuerschaltung angeordnet und das Freigabesignal erhält die Freigabeschaltung entweder über einen codierten Schlüssel, der in einem entsprechenden Lesegerät gelesen wird, bevorzugt jedoch mit den gewünschten nutzungsspezifischen Daten per Funk. Der Berechtigungscode wird von der Freigabeschaltung für jeden Benutzungsvorgang einmalig, bevorzugt jedoch während jedes Freigabeintervalls periodisch dem Freigabeprozess, zugeführt. Bei Empfang eines unzulässigen Berechtigungscodes beendet der Freigabeprozessor die Aktivierung der Steuerschaltung, die Vorrichtung geht damit in den nicht aktiven Zustand zurück. Diese Ausführungsform der Erfindung stellt sicher, dass der Freigabezustand nur dann über einen längeren Zeitraum aufrechterhalten bleibt, wenn die Freigabeeinrichtung intakt arbeitet und periodisch den Berechtigungscode liefern kann.

Gemäß einer bevorzugten Ausführungsform der Erfindung enthält das Freigabesignal, welches die Freigabeschaltung empfängt, für den jeweils berechtigten Benutzer definierte zugelassene Berechtigungszeitintervalle. Diese Berechtigungszeitintervalle werden als Teil des Berechtigungscodes dem Freigabeprozessor zugeführt. Der Freigabeprozessor enthält in dieser bevorzugten Ausführungsform der Erfindung eine Zeituhr, die ein die aktuelle Zeit kennzeichnendes Zeitsignal dem Freigabeprozessor zuführt. Sobald das aktuelle Zeitsignal außerhalb der zugelassenen Berechtigungsintervalle liegt, so wird die Steuerschaltung deaktiviert, die Vorrichtung wird dadurch blockiert, der Freischaltzustand also beendet. Auf diese Weise wird der Diebstahfschutz noch weiter verbessert, da ein unberechtigter Betrieb außerhalb der Berechtigungszeitintervalle nicht möglich ist, also auch eine gewaltsame Entwendung der Vorrichtung innerhalb der unzulässigen Zeitintervalle zuverlässig unterbleibt.

Bevorzugt sind in der Vorrichtung Positionsortungsmittel vorgesehen, welche beispielsweise in dem Zusammenwirken mit dem GPS-System oder mit anderen bekannten Funkzellenortungssystemen eine Bestimmung der aktuellen Ortsposition der Vorrichtung gestatten.

Gemäß einer besonders bevorzugten Ausführungsform der Erfindung enthält die Freigabeeinrichtung einen Bewegungs- und/oder Beschleunigungssensor oder einen Vibrationssensor, der anspricht, wenn die Vorrichtung ohne Freigabe, d. h. bei nicht aktivierter Steuerschaltung, in Bewegung versetzt wird, also beispielsweise durch Fremdgeräte angehoben und verladen werden soll. Der Sensor aktiviert dann eine entsprechende Alarmmeldung, die beispielsweise per Funk an eine stationäre Überwachungszentrale weitergegeben wird. Auf diese Weise kann jede unerwünschte Bewegung, und insbesondere jeder Diebstahl der Vorrichtung auch dann festgestellt werden, wenn die Vorrichtung nicht freigeschaltet ist, also durch einen eigenen Antrieb nicht in Bewegung versetzt werden kann.

Bevorzugt enthält die Freigabeeinrichtung eine in der Vorrichtung möglichst versteckt angebrachte Notstromversorgung, welche das Positionsortungssystem, den Alarmprozessor, den Bewegungs- oder Vibrationssensor und gegebenenfalls auch die Zeituhr auch bei abgetrennter oder zerstörter regulärer Spannungsquelle speist, damit die Einrichtung bei dem Versuch einer unrechtmäßigen Entwendung soweit aktiviert werden kann, dass die Abgabe eines Alarms per Funk möglich ist. Vorteilhafterweise lassen sich mit dem Notstromaggregat auch die Positionsortungsmittel aktivieren, damit dann zusammen mit einem Alarmsignal auch die aktuelle Position der Vorrichtung an die Zentrale übertragen werden kann.

Gemäß einer weiteren bevorzugten Ausführungsform der Erfindung enthält die Freigabeeinrichtung auch einen Datenrekorder, der von der Vorrichtung, der Steuerschaltung und gegebenenfalls auch den Positionsortungsmitteln die aktuellen Daten erhält, diese aufzeichnet und per Funk an die Zentrale abgeben kann, damit eine ständige Überwachung der Betriebsdaten und der Ortsposition der Vorrichtung möglich ist.

Vorteilhafte Weiterbildungen der Erfindung sind durch die Merkmale der Unteransprüche gekennzeichnet.

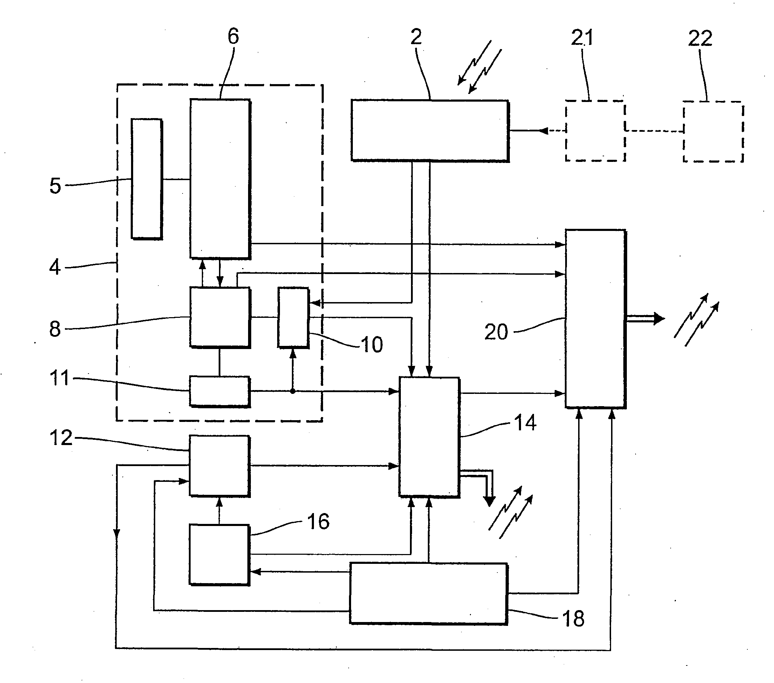

Im Folgenden wird ein Ausführungsbeispiel der Erfindung anhand der Zeichnung näher erläutert.

Die Figur zeigt ein Blockschaltbild der Freigabeeinrichtung, die in einer mobilen Vorrichtung, beispielsweise einer Baumaschine oder einem Lkw oder einem Transportcontainer angeordnet ist. Die Vorrichtung 4 enthält beispielsweise verschiedene Aggregate 6, wie Arbeitswerkzeuge, eine Steuerschaltung 8, auch Maschinencontroller genannt, welche die einzelnen Funktionen und Betätigungsschritte der Aggregate und der Vorrichtung steuert. Vorgesehen ist ferner ein Zündschloß 5, welches mittels eines Zündschlüssels betätigbar ist und beispielsweise die Zündung eines Antriebsmotors in bekannter Weise ermöglicht.

Die Freigabeeinrichtung enthält ferner eine Freigabeschaltung 2, die über Funk oder
- alternativ über einen codierten Schlüssel 22 und ein entsprechendes Lesegerät 21
- ein Freigabesignal erhält, welches benutzerspezifische Daten wie Kundenidentifikation, Vorrichtungsidentifikation, Nutzungszeitraum und Betriebsdaten, insbesondere auch zulässige Betriebszeitintervalle und zulässige geographische Betriebsgebiete enthält, die in der Freigabeschaltung 2 gegebenenfalls unter Zwischenspeicherung teilweise oder ganz in einen Berechtigungscode umgesetzt werden. Der Berechtigungscode wird einem Freigabeprozessor 10 zugeführt, der Bestandteil der Steuerschaltung 8 sein kann, der jedoch alternativ auch als separate Baueinheit ausgeführt sein kann.

Vorgesehen sind ferner Positionsortungsmittel 12, die beispielsweise mit dem GPS-System zusammenwirken und eine Bestimmung der aktuellen Position der Vorrichtung ermöglichen. Eine Zeituhr 11 ist mit dem Freigabeprozessor 10 verbunden und ist ferner an einen Alarmprozessor 14 angeschlossen, der von der Freigabeschaltung 2 und von der Steuerschaltung Signale empfangen kann. Die Positionsortungsmittel 12 stehen ebenfalls mit dem Alarmprozessor 14 und außerdem mit einem Datenrekorder 20 in Verbindung, der die aktuellen Betriebsdaten von den Aggregaten 6 der Vorrichtung 4 und/oder von der Steuerschaltung 8 und von den Positionsortungsmitteln 12 erhält.

Vorgesehen ist ferner ein Bewegungs- oder Vibrationssensor 16, der beim Auftreten von Vibration oder Bewegungen während der Freischaltphase der Vorrichtung aktiviert ist und beim Auftreten einer Bewegung oder einer Vibration ein Sensorsignal an den Alarmprozessor 14 abgibt, der daraufhin ein Alarmsignal erzeugt, welches entweder direkt per Funk oder über den Datenrekorder 20 per Funk an eine Zentrale übertragen werden kann. Das Sensorsignal des Sensors 16 aktiviert auch die Positionsortungsmittel 12, so dass die aktuellen Positionsdaten zusammen mit dem Alarmsignal der Zentrale zugeführt werden können.

Die Freigabeeinrichtung enthält noch ein Notstromaggregat, welches in der Vorrichtung möglichst verborgen untergebracht ist und dafür sorgt, dass die Information über eine Manipulation oder einen Diebstahl der Vorrichtung auch bei abgetrennter oder zerstörter Versorgungsquelle - beispielsweise durchgeschnittenen Leitungen oder einem Abtrennen der Batterie - noch an die Zentrale weitergegeben werden kann.

## Patentansprüche

1. Freigabeeinrichtung für eine bewegliche oder fahrbare Vorrichtung (4), insbesondere für eine Baumaschine, die mindestens eine Steuerschaltung (8) zum Steuern und Ausführen verschiedener Funktionen enthält,
mit einer Freigabeschaltung (2),
wobei die Freigabeschaltung (2) nach Empfang eines Freigabesignals einem Freigabeprozessor (10) einen Berechtigungscode zuführt und
wobei der Freigabeprozessor (10) den Berechtigungscode prüft, bei festgestellter Zulässigkeit des Berechtigungscodes die Steuerschaltung (8) aktiviert und **dadurch** die Vorrichtung freischaltet, d.h. einen Freischaltzustand herberfült, und bei festgestellter Unzulässigkeit des Berechtigungscodes die Aktivierung der Steuerschaltung (8) verhindert und **dadurch** die Vorrichtung nicht freischaltet,
**dadurch gekennzeichnet,**
- **dass** die Vorrichtung Positionsortungsmittel (12) zur Bestimmung der aktuellen Ortsposition enthält,
- **dass** das Freigabesignal der Freigabeschaltung (2) eine Information über ein für den jeweiligen berechtigten Benutzer zugelassenes geographisches Betriebsgebiet enthält, welche die Freigabeschaltung (2) einem Alarmprozessor (14) zuführt,
- **dass** die Positionsortungsmittel (12) jeweils die aktuelle geographische Position dem Alarmprozessor (14) zuführen,
- **dass** der Alarmprozessor (14) im Freischaltzustand ein Alarmsignal abgibt, wenn die aktuelle geographische Position außerhalb des zugelassenen geographischen Betriebsgebietes liegt,
- **dass** bei Beendigung des Freischaltzustandes in dem Alarmprozessor (14) ein beschränktes geographisches Ruhegebiet um die zuletzt zugelassen eingenommene aktuelle Position definiert und gespeichert wird, und
- **dass** der Alarmprozessor (14) ein Alarmsignal abgibt, wenn die aktuelle geographische Position aus dem beschränkten Ruhegebiet wandert.

2. Freigabeeinrichtung nach Anspruch 1,
**dadurch gekennzeichnet, dass**
der Freigabeprozessor (10) in der Steuerschaltung (8) enthalten ist.

3. Freigabeeinrichtung nach Anspruch 1 oder 2,
**dadurch gekennzeichnet, dass**
die Freigabeschaltung (2) das Freigabesignal drahtlos per Funk oder über einen in einer Aufnahmeeinrichtung einführbaren codierten Schlüssel erhält.

4. Freigabeeinrichtung nach einem der vorstehenden Ansprüche,
**dadurch gekennzeichnet, dass**
die Freigabeschaltung (2) den Berechtigungscode periodisch dem Freigabeprozessor (10) zuführt und bei Empfang eines unzulässigen Berechtigungscodes die Vorrichtung nicht freigibt bzw. eine zuvor freigeschaltete Vorrichtung blockiert.

5. Freigabeeinrichtung nach einem der vorstehenden Ansprüche,
**dadurch gekennzeichnet, dass**
der Freigabeprozessor (10) in einer Berechtigungstabelle zulässige Berechtigungscodes gespeichert hält und dass der Inhalt der Berechtigungstabelle per Funk veränderbar ist.

6. Freigabeeinrichtung nach einem der vorstehenden Ansprüche,
**dadurch gekennzeichnet, dass**
die Freigabeschaltung (2) über das empfangene Freigabesignal eine Information erhält, welche für den jeweils berechtigten Benutzer zugelassene Berechtigungszeitintervalle kennzeichnet, und diese Information als Teil des Berechtigungscodes dem Freigabeprozessor (10) zuleitet, dass eine Zeituhr (11) ein aktuelles zeitkennzeichnendes Zeitsignal dem Freigabeprozessor (10) zuleitet, und dass der Freigabeprozessor (10) die Freigabe der Vorrichtung beendet, sobald das Zeitsignal außerhalb der zugelassenen Berechtigungszeitintervalle liegt.

7. Freigabeeinrichtung nach einem der vorstehenden Ansprüche,
**dadurch gekennzeichnet, dass**
der Bewegungs- oder Vibrationssensor (16) bei nicht freigeschalteter Vorrichtung jede Bewegung, Rüttelbewegung und/oder Beschleunigung der Vorrichtung detektiert und über den Alarmprozessor (14) einen Alarm aktiviert.

8. Freigabeeinrichtung nach einem der vorstehenden Ansprüche,
**dadurch gekennzeichnet, dass**
der Bewegungs- und/oder Vibrationssensor (16) bei der Dektektion einer Bewegung während eines nicht freigeschalteten Zustandes die Positionsortungsmittel (12) und den Alarmprozessor (14) aktiviert.

9. Freigabeeinrichtung nach einem der vorstehenden Ansprüche,
**dadurch gekennzeichnet, dass**
der Bewegungs- oder Vibrationssensor (16) bei einer detektierten Bewegung der nicht freigeschalteten Vorrichtung den Alarmprozessor (14) zur Abgabe eines Alarmsignals aktiviert.

10. Freigabeeinrichtung nach einem der vorstehenden Ansprüche,
**gekennzeichnet durch**
eine in der Vorrichtung verborgen angebrachte Notstromversorgung, welche die Positionsortungsmittel (12), den Alarmprozessor (14), den Sensor (16) gegebenenfalls auch die Zeituhr (11) auch bei abgetrennter oder zerstörter regulärer Spannungsquelle speist.

11. Freigabeeinrichtung nach einem der vorstehenden Ansprüche,
**dadurch gekennzeichnet, dass**
das Alarmsignal über Funk an eine stationäre Zentrale abgebbar ist.

12. Freigabeeinrichtung nach einem der vorstehenden Ansprüche,
**dadurch gekennzeichnet, dass**
die Positionsortungsmittel (12) ein GPS-Ortungssystem enthalten, welches die aktuelle geographische Position ortet.

13. Freigabeeinrichtung nach einem der Ansprüche 1 bis 11,
**dadurch gekennzeichnet, dass**
die Positionsortungsmittel (12) ein Funkzellen-Ortungssystem sind.

14. Freigabeeinrichtung nach einem der vorstehenden Ansprüche,
**gekennzeichnet durch**
einen Datenrekorder (20), der von einzelnen Aggregaten (6) der Vorrichtung und von der Steuerschaltung (8) Betriebsdaten erhält, diese aufzeichnet und per Funk an eine stationäre Zentrale abgibt.

15. Freigabeeinrichtung nach einem der vorstehenden Ansprüche,
**dadurch gekennzeichnet, dass**
der Datenrekorder (20) von den Positionsortungsmitteln (12) die aktuellen Positionsdaten und von dem Alarmprozessor (14) das Alarmsignal erhält und die aktuellen geographischen Positionsdaten sowie das Alarmsignal per Funk an die stationäre Zentrale abgibt.

16. Freigabeeinrichtung nach einem der vorstehenden Ansprüche,
**dadurch gekennzeichnet, dass**
mittels des drahtlosen Signalübertragungssystems innerhalb der Steuerschaltung (8), dem Freigabeprozessor (10), der Freigabeschaltung (2), dem Alarmprozessor (14) und gegebenenfalls dem Datenrekorder (20) alle Einstellungen, wie Berechtigungscode, zugelassene Betriebszeitintervalle, zugelassenes Betriebsgebiet etc., an die jeweilige Betriebssituation und den jeweiligen Benutzer anpassbar sind.

## Claims

1. Enabling device for a mobile or movable apparatus (4), in particular for a construction machine, which contains at least one control circuit (8) for controlling and carrying out different functions,
with an enabling circuit (2),
wherein the enabling circuit (2) supplies an authorisation code to an enabling processor (10) after receiving an enabling signal, and
wherein the enabling processor (10) checks the authorisation code, activates the control circuit (8) if the permissibility of the authorisation code is established and thereby enables the apparatus, that is, brings about an enabled state, and prevents the activation of the control circuit (8) if the impermissibility of the authorisation code is established and thereby does not enable the apparatus, **characterised in that**
- the apparatus contains position-locating means (12) for determining the current location,
- the enabling signal of the enabling circuit (2) contains information about a permitted geographical operation area for the respective authorised user, which the enabling circuit (2) supplies to an alarm processor (14),
- the position-locating means (12) in each case supply the current geographical position to the alarm processor (14),
- the alarm processor (14) emits an alarm signal when in the enabled state and the current geographical position lies outside the permitted geographical operation area,
- when the enabled state in the alarm processor (14) ends, a limited geographical rest area around the most recently permittedly assumed current position is defined and stored, and
- the alarm processor (14) emits an alarm signal if the current geographical position strays out of the limited rest area.

2. Enabling device according to Claim 1,
**characterised in that**
the enabling processor (10) is contained in the control circuit (8).

3. Enabling device according to Claim 1 or 2,
**characterised in that**
the enabling circuit (2) receives the enabling signal wirelessly by radio or by means of a coded key which can be inserted in a receiving device.

4. Enabling device according to one of the preceding claims,
**characterised in that**
the enabling circuit (2) supplies the authorisation code periodically to the enabling processor (10) and does not enable the apparatus or blocks a previously enabled apparatus if an impermissible authorisation code is received.

5. Enabling device according to one of the preceding claims,
**characterised in that**
the enabling processor (10) keeps permissible authorisation codes stored in an authorisation table and the content of the authorisation table can be changed by radio.

6. Enabling device according to one of the preceding claims,
**characterised in that**
the enabling device (2) receives information by means of the received enabling signal, which identifies permitted authorisation time intervals for the respectively authorised user and forwards this information to the enabling processor (10) as part of the authorisation code, that a timer (11) forwards a current time-identifying time signal to the enabling processor (10), and that the enabling processor (10) ends the enabling of the apparatus as soon as the time signal is outside the permitted authorisation time intervals.

7. Enabling device according to one of the preceding claims,
**characterised in that**
the movement or vibration sensor (16) detects any movement, shaking and/or acceleration of the apparatus and activates an alarm by means of the alarm processor (14) when the apparatus is not enabled.

8. Enabling device according to one of the preceding claims,
**characterised in that**
the movement and/or vibration sensor (16) activates the position-locating means (12) and the alarm processor (14) when a movement is detected during a non-enabled state.

9. Enabling device according to one of the preceding claims,
**characterised in that**
the movement or vibration sensor (16) activates the alarm processor (14) in order to emit an alarm signal when a movement of the non-enabled apparatus is detected.

10. Enabling device according to one of the preceding claims,
**characterised by**
an emergency power supply which is applied in a hidden manner in the apparatus and feeds the position-locating means (12), the alarm processor (14), the sensor (16) and where applicable also the timer (11) even if the regular voltage source is cut off or destroyed.

11. Enabling device according to one of the preceding claims,
**characterised in that**
the alarm signal can be emitted by radio to a stationary centre.

12. Enabling device according to one of the preceding claims,
**characterised in that**
the position-locating means (12) contain a GPS positioning system which locates the current geographical position.

13. Enabling device according to one of Claims 1 to 11,
**characterised in that**
the position-locating means (12) are a radio cell positioning system.

14. Enabling device according to one of the preceding claims,
**characterised by**
a data recorder (20), which receives operating data from individual assemblies (6) of the apparatus and from the control circuit (8), records it and emits it by radio to a stationary centre.

15. Enabling device according to one of the preceding claims,
**characterised in that**
the data recorder (20) receives the current position data from the position-locating means (12) and the alarm signal from the alarm processor (14) and emits the current geographical position data and the alarm signal by radio to the stationary centre.

16. Enabling device according to one of the preceding claims,
**characterised in that**
all settings, such as authorisation code, permitted operating time intervals, permitted operation area etc., can be adapted to the respective operating situation and the respective user by means of the wireless signal transmission system within the control circuit (8), the enabling processor (10), the enabling circuit (2), the alarm processor (14) and where applicable the data recorder (20).

## Revendications

1. Dispositif de libération pour un dispositif (4) mobile ou transportable, en particulier pour une machine de chantier, qui contient au moins un circuit de commande (8) pour la commande et l'exécution de différentes fonctions, comprenant un circuit de libération (2),
le circuit de libération (2) amenant un code d'autorisation à un processeur de libération (10) pour la réception d'un signal de libération et
le processeur de libération (10) contrôlant le code d'autorisation, activant le circuit de commande (8) si l'on constate que le code d'autorisation est valable et activant ainsi le dispositif, c'est-à-dire provoquant un état d'activation et empêchant l'activation du circuit de commande (8) si on constate que le code d'autorisation n'est pas valable et n'activant pas de ce fait le dispositif, **caractérisé en ce que**
- le dispositif contient des moyens de localisation de position (12) pour déterminer la position locale actuelle,
- **en ce que** le signal de libération du circuit de libération (2) contient une information sur une zone d'exploitation géographique autorisée pour l'utilisateur habilité concerné que le circuit de libération (2) amène à un processeur d'alarme (14),
- **en ce que** les moyens de localisation de position (12) amènent respectivement la position géographique actuelle au processeur d'alarme (14),
- **en ce que** le processeur d'alarme (14) émet dans l'état d'activation un signal d'alarme lorsque la position géographique actuelle se situe en dehors de la zone d'exploitation géographique autorisée,
- **en ce que**, en cas d'expiration de l'état d'activation dans le processeur d'alarme (14), une zone de repos géographique limitée est définie autour de la dernière position actuelle occupée et autorisée et est mémorisée, et
- **en ce que** le processeur d'alarme (14) émet un signal d'alarme lorsque la position géographique actuelle sort de la zone de repos limitée.

2. Dispositif de libération selon la revendication 1,
**caractérisé en ce que**
le processeur de libération (10) est inclus dans le circuit de commande (8).

3. Dispositif de libération selon la revendication 1 ou 2,
**caractérisé en ce que**
le circuit de libération (2) reçoit le signal de libération sans fil par radio ou par une clé codée pouvant être introduite dans un dispositif de logement.

4. Dispositif de libération selon l'une quelconque des revendications précédentes, **caractérisé en ce que**
le circuit de libération (2) amène le code d'autorisation périodiquement au processeur de libération (10) et, en cas de réception d'un code d'autorisation non admis, ne libère pas le dispositif et bloque un dispositif activé auparavant.

5. Dispositif de libération selon l'une quelconque des revendications précédentes, **caractérisé en ce que**
le processeur de libération (10) garde mémorisés des codes d'autorisation valables dans un tableau d'autorisation et **en ce que** le contenu du tableau d'autorisation peut être modifié par radio.

6. Dispositif de libération selon l'une quelconque des revendications précédentes, **caractérisé en ce que**
le circuit de libération (2) obtient par le signal de libération reçu une information qui caractérise des intervalles de temps d'autorisation admis pour l'utilisateur respectivement autorisé et achemine cette information comme partie du code d'autorisation au processeur de libération (10), **en ce qu'**une minuterie (11) achemine un signal de temps actuel caractérisant le temps au processeur de libération (10) et **en ce que** le processeur de libération (10) achève la libération du dispositif dès que le signal de temps se situe en dehors des intervalles de temps d'autorisation autorisés.

7. Dispositif de libération selon l'une quelconque des revendications précédentes, **caractérisé en ce que**
le capteur de mouvement ou de vibration (16) détecte tout mouvement, mouvement de secousse et/ou accélération du dispositif lorsque le dispositif n'est pas activé et active une alarme par l'intermédiaire du processeur d'alarme (14).

8. Dispositif de libération selon l'une quelconque des revendications précédentes, **caractérisé en ce que**
le capteur de mouvement et/ou de vibration (16) active les moyens de localisation de position (12) et le processeur d'alarme (14) en cas de détection d'un mouvement pendant un état non activé.

9. Dispositif de libération selon l'une quelconque des revendications précédentes, **caractérisé en ce que**
le capteur de mouvement ou de vibration (16) active le processeur d'alarme (14) pour l'émission d'un signal d'alarme dans le cas d'un mouvement détecté du dispositif non activé.

10. Dispositif de libération selon l'une quelconque des revendications précédentes, **caractérisé par**
une alimentation en courant de secours placée de façon dissimulée dans le dispositif, qui alimente les moyens de localisation de position (12), le processeur d'alarme (14), le capteur (16), éventuellement également la minuterie (11) même si la source de tension régulière est coupée ou détruite.

11. Dispositif de libération selon l'une quelconque des revendications précédentes, **caractérisé en ce que**
le signal d'alarme peut être envoyé par radio à une centrale fixe.

12. Dispositif de libération selon l'une quelconque des revendications précédentes, **caractérisé en ce que**
les moyens de localisation de position (12) contiennent un système de localisation par GPS qui localise la position géographique actuelle.

13. Dispositif de libération selon l'une quelconque des revendications 1 à 11, **caractérisé en ce que**
les moyens de localisation de position (12) sont un système de localisation par cellule radio.

14. Dispositif de libération selon l'une quelconque des revendications précédentes, **caractérisé par**
un enregistreur de données (20), qui reçoit de différents ensembles (6) du dispositif et du circuit de commande (8) des données de service, les enregistre et les envoie par radio à une centrale fixe.

15. Dispositif de libération selon l'une quelconque des revendications précédentes, **caractérisé en ce que**
l'enregistreur de données (20) reçoit les données de position actuelles des moyens de localisation de position (12) et le signal d'alarme du processeur d'alarme (14) et envoie les données de position géographiques actuelles ainsi que le signal d'alarme par radio à la centrale fixe.

16. Dispositif de libération selon l'une quelconque des revendications précédentes, **caractérisé en ce que**
tous les réglages, comme le code d'autorisation, des intervalles de temps d'exploitation autorisés, le secteur d'exploitation autorisé, etc., peuvent être adaptés à la situation de service respective et à l'utilisateur respectif au moyen du système de transmission de signal sans fil à l'intérieur du circuit de commande (8), du processeur de libération (10), du circuit de libération (2), du processeur d'alarme (14) et éventuellement de l'enregistreur de données (20).
